# EUROPEAN PATENT APPLICATION

(11) **EP 4 778 805 A1**
(43) Date of publication of application: **22.07.2026**
(21) Application number: 26152553.9
(22) Date of filing: 19.01.2026
(51) Int. Cl.: B62B 5/00, B62B 7/06, B62B 9/08

(54) **DEVICE FOR TRANSPORTING INFANTS AND/OR CHILDREN**

(30) Priority: 20.01.2025 IT 202500000819
(71) Applicant: L'Inglesina Baby S.p.A., 36077 Altavilla Vicentina (VI) (IT)
(72) Inventor: TOMASI, Ivan, 36051 Creazzo (IT)
(74) Representative: Modiano, Micaela Nadia

(57) **Abstract**

A motorized movement device (1) for transporting infants and/or children, which comprises a supporting frame (2), wheel units (3) for resting on and moving over a surface, and at least one handle (4) configured for guiding and moving said device (1) by a user, and an actuation motor (5) which is connected kinematically to at least one wheel unit (3); at the handle (4), control means are provided comprising at least one control element (11) which can be actuated by the user with at least one of his or her hands holding the handle (4) and which is functionally connected to a control and actuation unit of the one or more actuation motors (5), the control means being configured to drive the at least one actuation motor (5) in a first direction of rotation in order to move the supporting frame (2) in a first advancement direction (100) or in a second direction of rotation in order to move the supporting frame (2) in a second direction (101) which is opposite to the first advancement direction (100) or to brake the frame during the movement along the first advancement direction (100).

## Description

The present invention relates to a motorized movement device, of the type pushed by hand, for transporting infants and/or children, such as for example a stroller.

Motorized movement devices are known, and are widely available on the market, which have one or more motors configured to move wheels, optionally as an aid to the pushing action by the user.

Known movement devices are constituted, generally, by a frame associated with wheel units below, some of which, typically the rear wheels with respect to the normal direction of advancement, are associated with motor means which can be activated and deactivated on command by the user.

In the sector of strollers for transporting children and/or infants, devices have been proposed, in which actuation of the motor means is done by way of using a handle or by way of sensor means, which sense force or torque and are configured to detect the force exerted by the user, to use it as an input parameter to set the drive level of the motors.

However, such solutions, although valid from the theoretical point of view, are particularly complex and delicate from the implementation point of view, as well as being prone to errors and possible malfunctions under some operating conditions.

For the purposes of example, patent application WO2015107713A1 describes a stroller wherein the frame supports an actuation motor, powered by a battery. Actuation of the motor is done by way of a pressure sensor, arranged on the handle of the stroller, which is configured to detect the pressure exerted by the user: a command and control system uses the pressure data measured to consequently command the corresponding degree of driving of the motor means.

The aim of the present invention is to provide a motorized movement device that is capable of improving the known art in one or more of the above-mentioned aspects.

Within this aim, an object of the invention is to make available a motorized movement device that is extremely intuitive in its operation.

Another object of the invention is to devise a motorized movement device that is extremely robust and reliable in its operation.

Not least an object of the invention is to provide a motorized movement device that is highly reliable, easy to implement and at low cost.

This aim and these and other objects which will become more apparent hereinafter are achieved by a motorized movement device according to claim 1, optionally provided with one or more of the characteristics of the dependent claims.

Further characteristics and advantages of the invention will become more apparent from the description of some preferred, but not exclusive, embodiments of the motorized movement device according to the invention, illustrated by way of non-limiting example in the accompanying drawings wherein:
Figure 1 is a perspective view of a first variation of embodiment of a stroller according to the invention;
Figure 2 is a rear view of the handle of the stroller of Figure 1;
Figure 3 is a view from above of the handle of Figure 2;
Figure 4 is a perspective view of the handle of Figures 2 and 3;
Figure 5 is a perspective view of a second variation of embodiment of a stroller according to the invention;
Figure 6 is a rear view of the handle of the stroller of Figure 5;
Figure 7 is a view from above of the handle of Figure 5;
Figure 8 is a perspective view of the handle of Figures 6 and 7;
Figure 9 is a view similar to that of Figure 3 of a variation of embodiment;
Figure 10 is a view similar to that of Figure 4 of the variation of embodiment of Figure 9.

With reference to the figures, the motorized movement device for transporting infants and/or children according to the invention, generally designated by the reference numeral 1, comprises, preferably, a stroller 30.

The motorized movement device 1 comprises a supporting frame 2, wheel units 3 for resting on and moving over a surface, and at least one handle 4 by means of which the user guides and moves the device 1.

The device 1 is provided with at least one actuation motor 5 which is connected kinematically to at least one wheel unit 3.

Preferably the actuation motor 5 is connected to a respective wheel unit 3 that does not steer.

Usually, if the motorized movement device 1 is constituted by a stroller 30, the wheels that do not steer and which are connected kinematically to the one or more actuation motors 5 comprise the two rear wheel units 3.

It is possible for the device 1 to have two motorized wheel units 3a.

In this regard, the device 1 can comprise two actuation motors 5 which are independent of each other, each one of which is connected kinematically to a respective motorized wheel unit 3a.

The two actuation motors 5 and the respective motorized wheel units 3a can be connected by way of a supporting axle arranged at the axis of rotation of the motorized wheel units 3a.

In this manner, each actuation motor 5 drives a respective motorized wheel unit 3a, and it is therefore possible, by acting conveniently on the control of the actuation motors 5, to provide assistance not only with the advancement of the device 1 but also with the steering.

However, there is no reason why a single actuation motor 5 cannot be used, optionally by providing interface means, for example a differential, arranged between the actuation motor 5 and the two wheel units 3a.

The supporting frame 2 is associated, preferably, with a battery unit, functionally to the one or more actuation motors 5 so as to exchange energy with it. In particular, the battery unit 6 powers the one or more actuation motors 5 but optionally the battery unit can also be recharged by receiving energy from the actuation motors 5 when the latter act as generators.

According to a first aspect of the present invention, the movement device 1 comprises control means which comprise at least one control element 11 which can be actuated by the user with at least one of his or her hands holding the handle 4.

The at least one control element is functionally connected to a control and actuation unit of the one or more actuation motors 5.

The control means are configured to drive the at least one actuation motor 5 in a first direction of rotation in order to move the supporting frame 2 in a first advancement direction 100 or in a second direction of rotation in order to move the supporting frame 2 in a second direction 101 which is opposite to the first advancement direction 100 or to brake the frame during the movement along the first advancement direction 100.

The at least one control element 11, 12 is configured to set a respective drive level of the at least one actuation motor 5: the above-mentioned drive level comprises the control of respective speed levels or the control of respective torque levels supplied.

According to an embodiment not shown in the figures, in the device 1 the control means comprise a control element associated with a selection device that can be actuated on command by the user to pass from a first operating condition, in which actuation of the control element drives the at least one actuation motor 5 in the first direction of rotation, to a second operating condition, in which the actuation of the control element drives the at least one actuation motor 5 in the second direction of rotation.

Basically, in this embodiment, there is a single control element, for example comprising a control lever, which is movable as a consequence of a force applied by the user between a first, zero angular position and a second, final angular position, the angular displacement from the first, zero angular position towards the second, final angular position determining an increase in the degree of driving of the at least one electric motor 5.

Associated with the control element is a selection device, typically a button, for passing between the first operating condition, in which the user, by acting on the control element, commands the frame 2 to move along the first advancement direction 100, and the second operating condition, in which, again by acting on the same control element to rotate it from the first, zero angular position to the at least one second angular position, the user commands the frame to move along the second advancement direction 101, or to brake.

Advantageously, proximately to the selection device, there can conveniently be an indicator light to show that the device is in the second operating condition (reverse/braking).

In place of the indicator light, it is possible to have a screen, for example an LED screen, or a similar device configured to show the operating condition selected by the user.

Preferably, the control element comprises a control lever which can be actuated in rotation about a respective axis.

Advantageously, the axis extends, in use, along a substantially vertical direction.

Conveniently, the lever can be rotated on command about the respective axis in contrast with elastic means.

With reference now to the embodiment shown in the figures, the control means comprise, substantially at the handle 4, a first and at least one second control element 11, 12, which can be actuated by the user with at least one of his or her hands holding the handle 4.

The first control element 11 is configured to drive the at least one actuation motor 5 in order to move the supporting frame 2 in the first advancement direction 100, while the second control element 12 is configured to drive the at least one actuation motor 5 in order to move the supporting frame 2 in a second direction 101 which is opposite to the first advancement direction 100 or to brake the supporting frame 2 when it is moving along the first advancement direction 100.

In particular, the first and the at least one second control element 11, 12 are configured to set a respective drive level of the at least one actuation motor 5.

This drive level comprises the control of respective speed levels or the control of respective torque levels supplied.

According to a first possible embodiment, the first and the at least one second control element 11, 12 can be arranged at different regions of the handle 4, for example, on the right-hand side and on the left-hand side of the handle 4 with respect to the advancement direction, so that they can be activated, respectively, by the right hand or by the left hand.

Obviously, there is no reason why, as shown in the figures, the first and the at least one second control element 11, 12 cannot alternatively be arranged so that they can be engaged by the same hand, for example by means of, respectively, the thumb and the index finger.

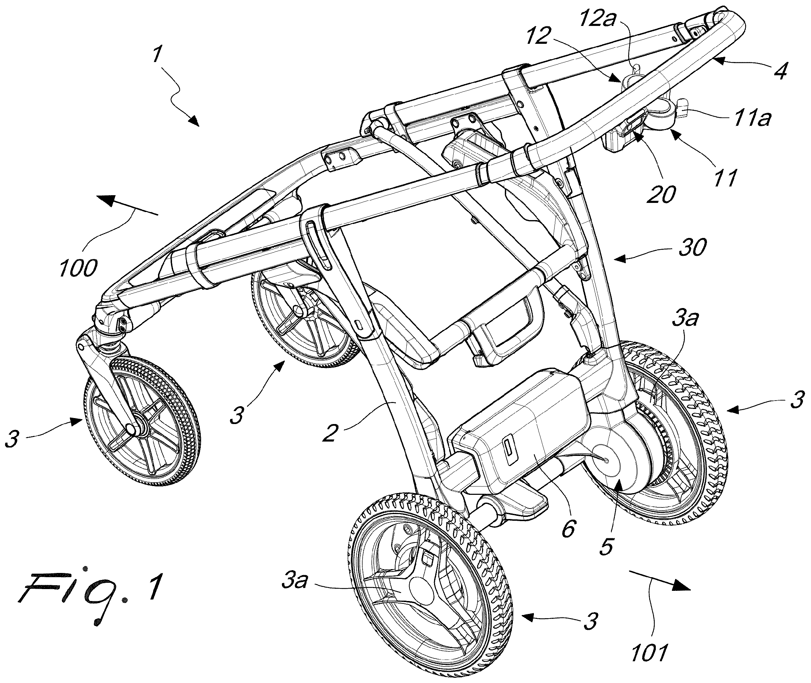

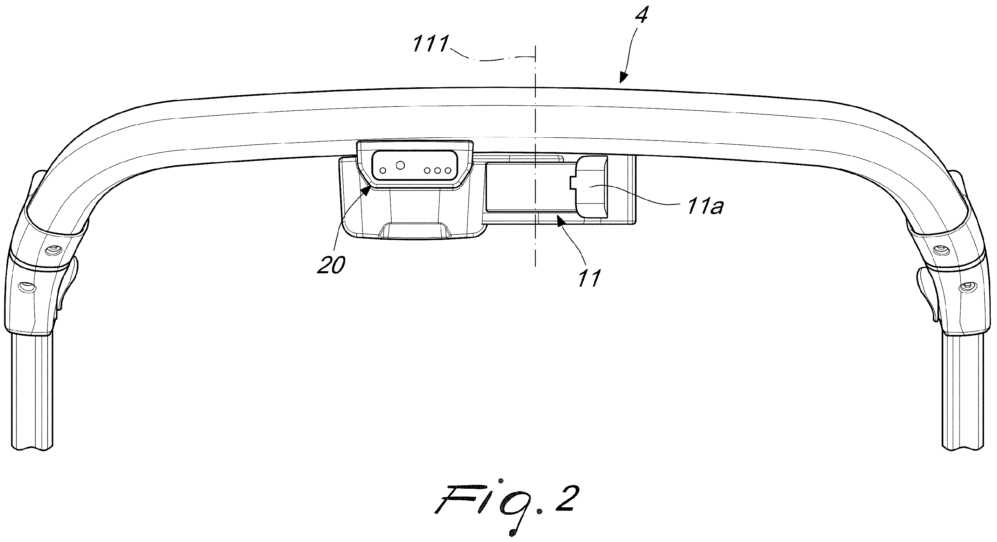

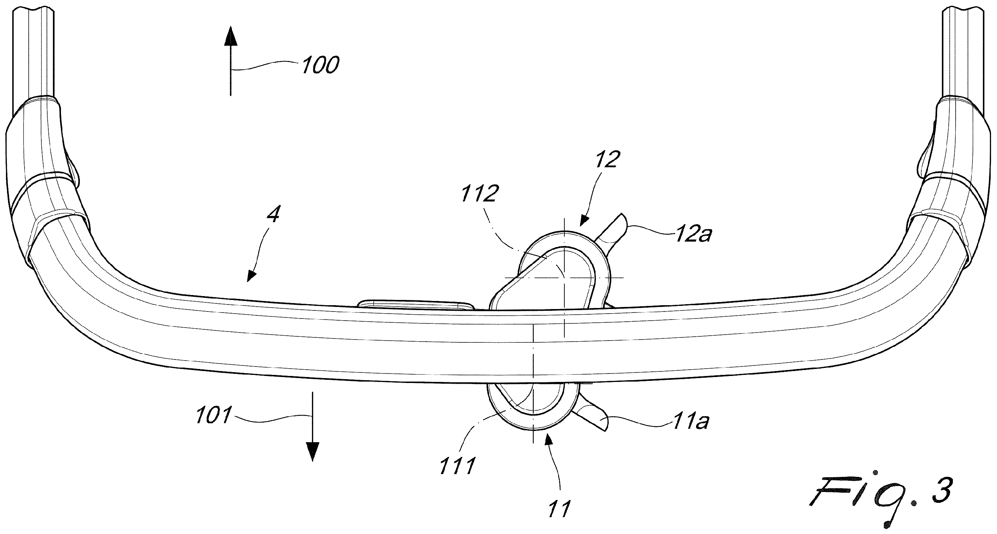

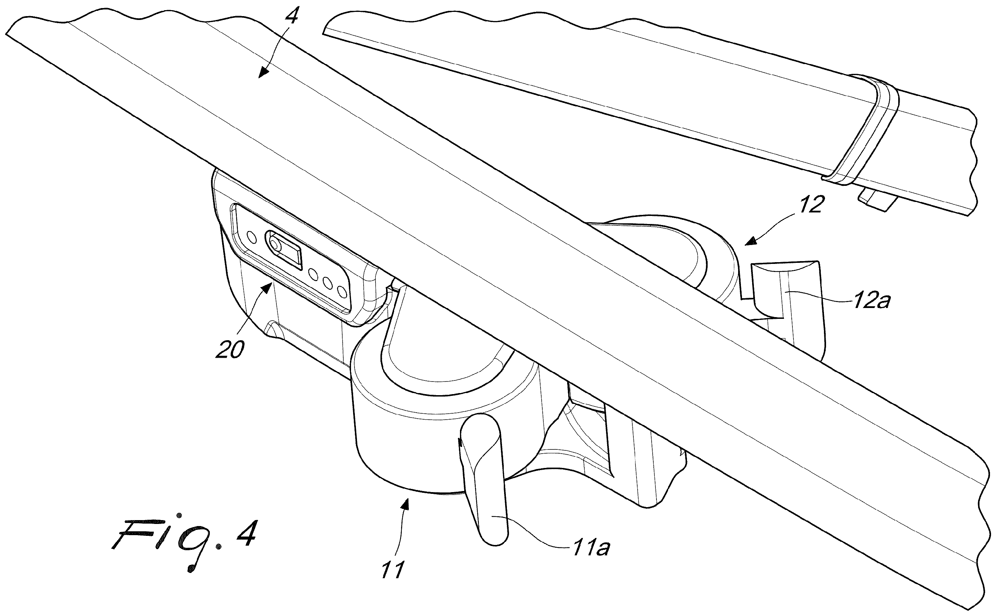

In this case, the first and the at least second control element 11, 12 are arranged one in front of the other along the first advancement direction 100, as shown in Figures 1 to 4.

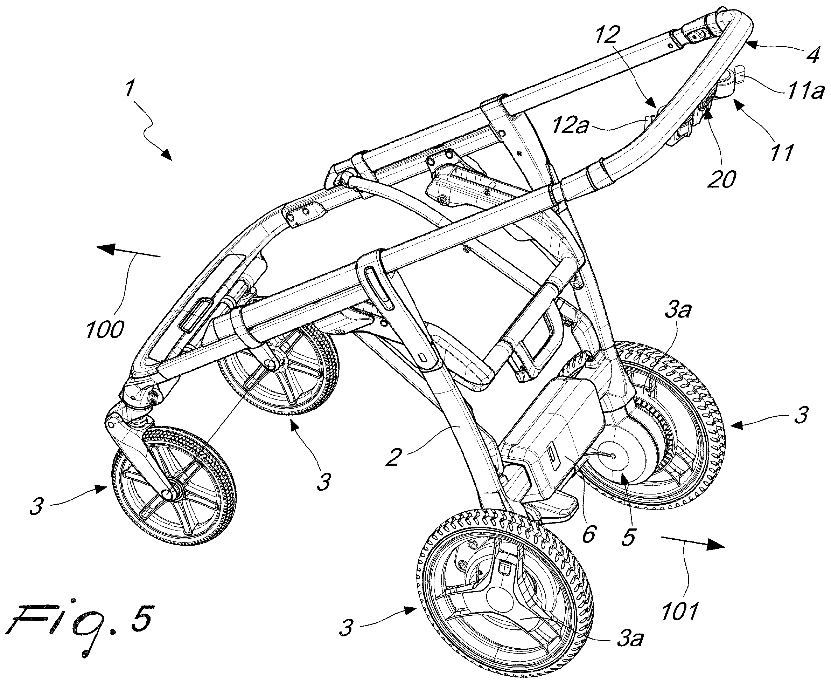

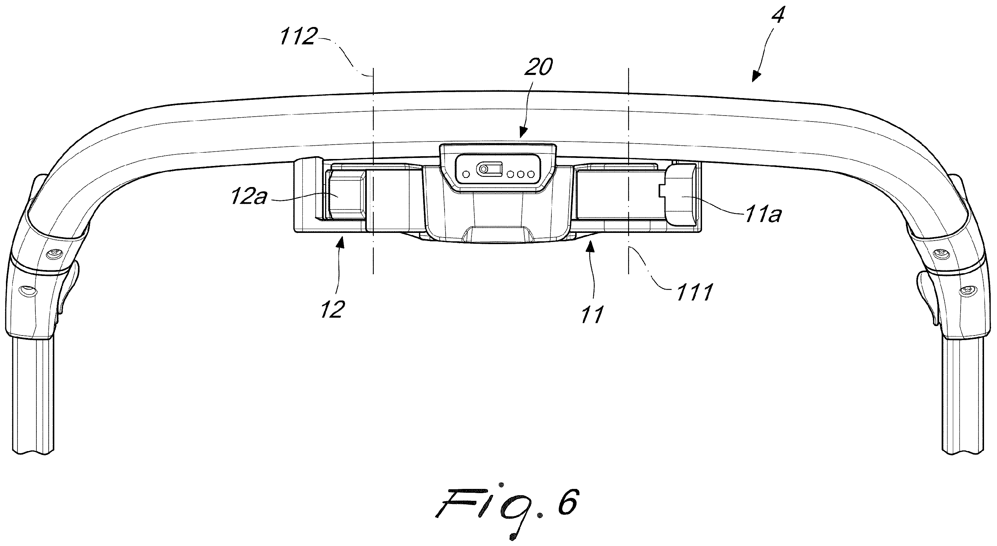

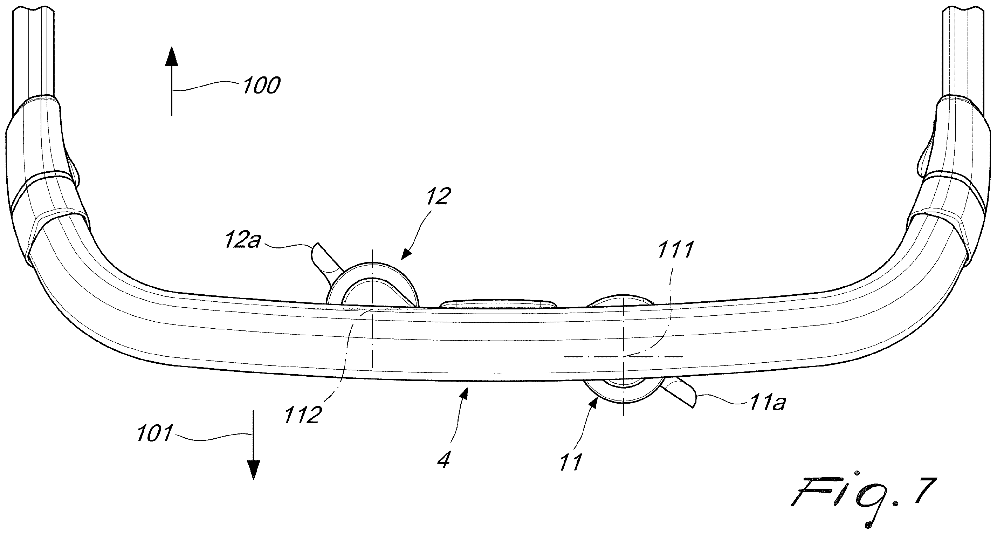

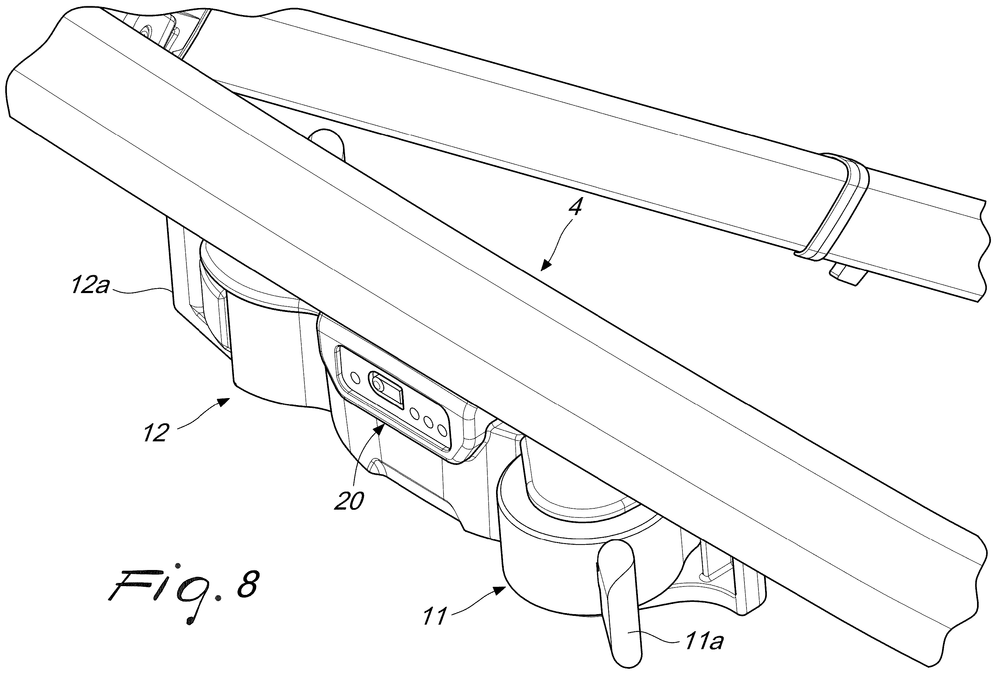

Obviously, there is no reason why, as explained above and shown in the embodiment illustrated in Figures 5 to 8, the first and the second control element cannot be arranged side-by-side along the extension of the handle 4.

Preferably, the first and the second control element 11, 12 comprise a respective first and second control lever 11a, 12a which can be actuated in rotation about a respective axis 111, 112.

Advantageously, the axes 111, 112 extend, in use, along a substantially vertical direction.

Conveniently, the first lever 11a and the second lever 12a can be rotated on command about the respective axis 111, 112 in contrast with elastic means.

Basically, the first control lever 11, which is configured to command the advancement of the stroller 30 along the advancement direction 100, requires the user to act, typically with their thumb, to exert a thrust action on the first control lever 11a in the same advancement direction 100 in order to rotate the control element 11 about the vertical axis 111, optionally in contrast with the elastic means, if the user wishes to command a "forward" movement of the stroller 30.

Similarly, by pulling toward himself or herself, therefore by exerting a force in a direction that corresponds to the second direction 101, the second control lever 12a so as to rotate the control element 12 about the respective axis 112, the user commands a "backward" movement of the stroller 30.

The first control lever 11a and the second control lever 12a are rotatable on command, as a consequence of a force applied by the user between a first, zero angular position and a second, final angular position, the angular displacement from the first, zero angular position towards the second, final angular position determining an increase in the degree of driving of the at least one electric motor 5.

The first and the at least one second control element 11, 12 are functionally connected to a control and actuation unit of the one or more actuation motors 5.

The control and actuation unit is configured to command the one or more actuation motors 5 with (at least two) different degrees of driving depending on the angle of rotation of the control levers 11a, 12a about the respective axis 111, 112.

Conveniently, the control and actuation unit is adapted to deactivate the actuation motor 5 if the user releases the control elements 11, 12. In this manner, if for any reason the user lets go of the handle 4, and therefore no longer has control of the motorized movement device 1, the one or more actuation motors 5 will be deactivated so as to drastically reduce the risk of involuntary movement of the device 1.

Obviously, if the user does not actuate the first or the second control element 11, 12, the movement device 1 can still be pushed and moved by virtue of the pushing action exerted by the user himself or herself.

Advantageously, there are activation means, such as a pushing or pressure detector arranged on the handle, which are configured to activate the driving of the actuation motors 5 only after detecting a minimum engagement and/or pushing time along a respective direction of movement. The presence of the activation means makes it possible to prevent accidental actuation and, optionally, to detect the direction in which the user wishes to move the frame 2, so that the control and actuation unit can drive the rotation of the respective motorized wheel units 3a in the right direction.

Likewise, if a preset time period elapses and no action has been performed by the user on the control means, or in general on the handle 4, it is possible for the control and actuation unit to automatically activate braking means or immobilization means, for example by means of forced immobilization of the actuation motors 5.

The braking can therefore be executed directly by the user, by means of actuating the control means, or automatically, under certain conditions of use.

In addition to or in substitution of what is described above, the motorized movement device 1 is provided with assisted braking means (not shown in the figures).

The assisted braking means can be controlled, for example, by a control button, also arranged on the handle 4, or by a device for detecting the speed (speedometer) and/or the inclination (inclinometer).

It is possible for the control means to comprise an inclinometer or accelerometer which detects the variation in inclination while driving.

The control and actuation unit is functionally associated with the inclinometer and/or with the accelerometer so as to cause an automatic variation of the thrusting power or of the thrusting torque on the part of the actuation motors 5 according to the data detected by the inclinometer and/or by the accelerometer.

Basically, the control and actuation unit is configured, for example, to reduce the thrusting power (if the user is moving uphill and reaches level ground) or to reduce the braking power (if the user is braking downhill and reaches level ground), and is set by the user by acting on the corresponding control element 11, 12.

For example, if the user is pressing the control lever 11a, 12a all the way (maximum power), the control and actuation unit, based on input from the inclinometer or of the accelerometer, cuts a percentage of power and/or of torque dispensed. It is also possible for the reduction of power and/or of torque to not always be in the same proportion, but a variable power or torque function set by the user.

Advantageously, it is possible to slow, substantially automatically, the motorized movement device 1 if an advancement speed or an inclination along the advancement direction is detected that is higher than a first reference threshold value, preset or presettable by the user.

Obviously, control means, such as a dedicated button, for the braking means can also be provided.

Basically, when the frame is stationary (parked), if after a certain period (preset or presettable) no movements of the wheel are detected via the sensors (typically Hall sensors) connected to the respective actuation motor 5, then the control and actuation unit acts to automatically switch off the system. If the user wishes to start moving again, it is necessary to activate the system, by acting for example on a powering-on button.

Alternatively, if the device is in "brake" mode (set previously), the system will not switch off, but will remain active and, if it detects forward or reverse movement of the wheel, will in any case brake and slow the frame on any descent.

The detection device for the speed is likewise conveniently configured to deactivate the one or more actuation motors 5 if a speed higher than a preset or presettable maximum value is detected, optionally placing the motor or the motors in brake mode.

This aspect is quite important in some particular situations, for example when crossing the road, when it would be advantageous to move the device 1 at a higher speed than the maximum speed set with the actuation motor 5.

In this manner in fact, if the user applies a thrust on the handle 4 that enables the stroller to proceed at a speed higher than maximum value (for example fixed at 6 km/h), the control and actuation unit will deactivate the actuation motors 5, so facilitating the thrust action by the user.

As described previously, the control elements 11 and 12 can also be supported by different supporting bodies, mutually spaced apart.

Conveniently, the device 1 has, on the handle 4, a display 20 configured to show data corresponding to the degree of driving and/or to the charge level of the battery, or, for example, controls to set the power dispensed by the actuation motor as a function of the weight carried.

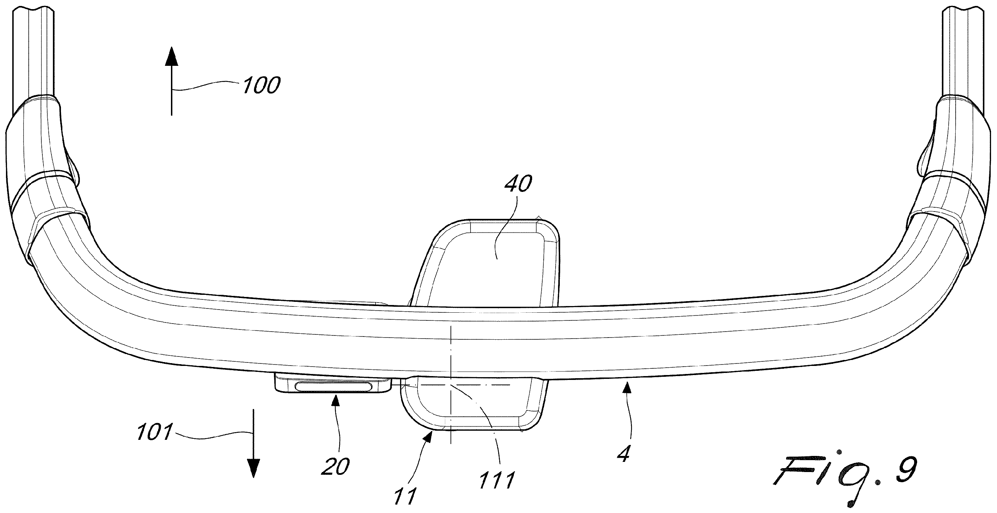

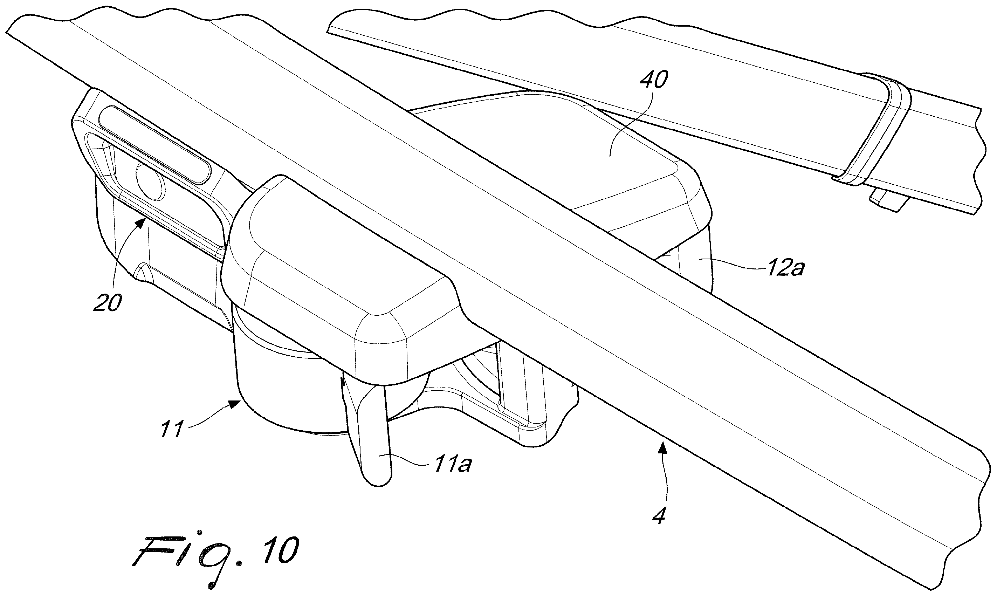

Conveniently, there can be, as shown in Figures 9 and 10, protection means 40 of the one or more control elements.

Such protection means 40 comprise, for example, an upper housing configured to prevent objects placed on the frame 2, or which come into involuntary contact with, the frame 2 from activating the control means.

The use of the motorized movement device 1, according to the invention, is the following.

If it is desired to use the actuation motors 5 with which the motorized movement device 1 is provided, the user will proceed to actuate the corresponding control elements 11 and/or 12, using the fingers of the hands which are already placed on the handle 4.

By "pushing" on the first control lever 11a of the first control element 11, the user commands, according to the angle of rotation of the control lever 11, 12, the forward advancement speed, while, by "pulling" on the second control lever 12a of the second control element 12, the user commands the "reverse" speed of the stroller 30.

With reference to the practical embodiment of the stroller 30, it should be noted that the choices in the construction contribute to optimizing a series of aspects that embody considerable importance, both from the point of view of ease of use and from the point of view of safety, so making the actuation of the one or more motors, and of the assisted movement in general, extremely practical and intuitive.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102025000000819 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A motorized movement device (1) for transporting infants and/or children, which comprises a supporting frame (2), wheel units (3) for resting on and moving over a surface, and at least one handle (4) configured for guiding and moving said device (1) by a user, said device (1) having at least one actuation motor (5) which is connected kinematically to at least one wheel unit (3), said supporting frame (2) being associated with a battery unit (6), functionally connected to each actuation motor (5), **characterized in that** it comprises, at said handle (4), control means comprising at least one control element (11) which can be actuated by the user with at least one of his or her hands holding said handle (4) and which is functionally connected to a control and actuation unit of the one or more actuation motors (5), said control means being configured to drive said at least one actuation motor (5) in a first direction of rotation in order to move said supporting frame (2) in a first advancement direction (100) or in a second direction of rotation in order to move said supporting frame (2) in a second direction (101) which is opposite to said first advancement direction (100) or to brake said frame during the movement along said first advancement direction (100), said at least one control element (11, 12) being configured to set a respective drive level of said at least one actuation motor (5), said drive level comprising the control of respective speed levels or the control of respective torque levels supplied.

2. The device according to claim 1, **characterized in that** said control means comprise a first and at least one second control element (11, 12), which can be actuated by the user with at least one of his or her hands holding said handle (4), said first and said at least one second control element (11, 12) being functionally connected to said control and actuation unit of the one or more actuation motors (5), said first control element (11) being configured to drive said at least one actuation motor (5) in a first direction of rotation in order to move said supporting frame (2) in said first advancement direction (100) and said second control element (12) being configured to drive said at least one actuation motor (5) in order to move said supporting frame (2) in said second direction (101) which is opposite to said first advancement direction (100) or in order to brake said frame during the movement along said first advancement direction (100), said first and said at least one second control element (11, 12) being configured to set a respective drive level of said at least one actuation motor (5), said drive level comprising the control of respective speed levels or the control of respective torque levels supplied.

3. The device according to claim 1, **characterized in that** said control means comprise a control element associated with a selection device that can be actuated on command by the user to pass from a first operating condition, in which actuation of the control element drives the at least one actuation motor (5) in the first direction of rotation, to a second operating condition, in which the actuation of the control element drives the at least one actuation motor (5) in the second direction of rotation.

4. The device (1) according to claim 2, **characterized in that** said first and said at least one second control element (11, 12) can be actuated by the same hand.

5. The device (1) according to one or more of the preceding claims, **characterized in that** said at least one control element (11, 12) comprises a respective control lever (11a, 12a) which can be actuated in rotation about a respective axis (111, 112).

6. The device (1) according to one or more of the preceding claims, **characterized in that** said axis (111, 112) comprises an axis that is substantially vertical in use.

7. The device (1) according to one or more of the preceding claims, **characterized in that** said at least one lever (11a, 12a) is rotatable on command about the respective axis (111, 112) in contrast with elastic means.

8. The device (1) according to one or more of the preceding claims, **characterized in that** said at least one control lever (11a, 12a) is rotatable on command, as a consequence of a force applied by the user, between a first, zero angular position and a second, final angular position, the angular displacement from said first, zero angular position towards said second, final angular position determining an increase in the degree of driving of said at least one electric motor (5).

9. The device (1) according to one or more of the preceding claims, **characterized in that** said first and said at least one second control element (11, 12) are arranged one in front of the other along said advancement direction (100).

10. The device (1) according to one or more of the preceding claims, **characterized in that** said first and said at least one second control element (11, 12) are arranged laterally adjacent to each other.

11. The device (1) according to one or more of the preceding claims, **characterized in that** said control and actuation unit (10) is adapted to deactivate said at least one actuation motor (5) if the user releases said control elements (11, 12).

12. The device (1) according to one or more of the preceding claims, **characterized in that** it comprises activation means, which comprise a pushing or pressure detector or similar, arranged at said handle (4), said activation means being configured to activate the driving of said at least one actuation motor (5) only after detecting a minimum engagement and/or pushing time along the first direction of movement.

13. The device (1) according to one or more of the preceding claims, **characterized in that** it comprises assisted braking means controlled by a control button arranged at said handle (4), or by a device for detecting the speed or the inclination of said frame (2).

14. The device (1) according to one or more of the preceding claims, **characterized in that** it comprises a device for detecting the speed of said frame (2), said control and actuation unit being configured to deactivate said at least one actuation motor (5) if a speed higher than a maximum speed value is detected.

15. The device (1) according to one or more of the preceding claims, **characterized in that** said control and actuation unit is functionally associated with the inclinometer and/or with the accelerometer so as to cause an automatic variation of the thrusting power or of the thrusting torque on the part of said actuation motors (5) according to the data detected by the inclinometer and/or by the accelerometer.
